Europäisches Patentamt

European Patent Office

Office européen des brevets

(11) Veröffentlichungsnummer: **0 250 859 B1**

(19)
(12)

# EUROPÄISCHE PATENTSCHRIFT

(45) Veröffentlichungstag der Patentschrift: **29.07.92**

(51) Int. Cl.⁵: **A01N 37/02**

(21) Anmeldenummer: **87107540.4**

(22) Anmeldetag: **23.05.87**

Die Akte enthält technische Angaben, die nach dem Eingang der Anmeldung eingereicht wurden und die nicht in dieser Patentschrift enthalten sind.

(54) Verfahren und Mittel zur Bekämpfung des einbindigen Traubenwicklers Eupoecilia ambiquella.

(30) Priorität: **31.05.86 DE 3618372**

(43) Veröffentlichungstag der Anmeldung:
**07.01.88 Patentblatt 88/01**

(45) Bekanntmachung des Hinweises auf die Patenterteilung:
**29.07.92 Patentblatt 92/31**

(84) Benannte Vertragsstaaten:
**AT CH DE ES FR GR IT LI**

(56) Entgegenhaltungen:
**EP-A- 0 099 572**

**CHEMICAL ABSTRACTS, Band 105, Nr. 13, 29. September 1986, Seite 439, Zusammenfassung Nr. 112423h, Columbus, Ohio, US; H. ARN et al.: "Sex pheromone of Eupoecilia ambiguella female: analysis and male response to ternary blend", & J. CHEM. ECOL. 1986, 12(6), 1417-29**

**COMMONWEALTH AGRICULTURAL BUREAU, no. OE068-03989, Rev. Appl. Entomol./Ser. A, Slough, Bucks, GB; H. ARN et al.: "Sex attractant formulations and traps for the grape moth Eupoecillia ambiguella Hb"**

(73) Patentinhaber: **BASF Aktiengesellschaft
Carl-Bosch-Strasse 38
W-6700 Ludwigshafen(DE)**

(72) Erfinder: **Becker, Rainer, Dr.
Im Haseneck 22
W-6702 Bad Duerkheim(DE)**
Erfinder: **Seufert, Walter, Dr.
Laerchenweg 19
W-6720 Speyer(DE)**
Erfinder: **Angerer, Winfried, Dr.
Schwarzwaldstrasse 69
W-6800 Mannheim 1(DE)**
Erfinder: **Krieg, Wolfgang, Dr.
Saarstrasse 17
W-6721 Weingarten(DE)**
Erfinder: **Neumann, Ulrich, Dr.
Am Deutschhof 25
W-6707 Schifferstadt(DE)**

**Beschreibung**

Die Traubenwickler gehören im Weinbau weltweit zu den wichtigsten Schadinsekten. Bei den in Europa und Vorderasien vorkommenden zwei Schmetterlingsarten handelt es sich um Eupoecilia (Clysia) ambiguella (Hb.) und Lobesia (Polychrosis) botrana (Schiff.).

Entsprechend ihrer klimatischen Ansprüche dominiert Eupoecilia in Weinbaugebieten nördlich der Alpen, Lobesia in südlichen Regionen (südl. Schweiz, Italien, Spanien, Frankreich, Griechenland, Israel u.a.).

Eupoecilia tritt also in wichtigen Weinbauländern (Österreich. Schweiz, Deutschland, Frankreich) auf und kann beträchtliche Ertragseinbußen verursachen. Bisher werden die Traubenwicklerarten mit den üblichen Mitteln, d.h. durch Anwendung von konventionellen Insektiziden unspezifisch bekämpft. Eine gezielte Kontrolle unter Schonung von Nützlingen (z.B. Schlupfwespenarten und Raubmilben) ist wünschenswert.

Es ist an sich bekannt, daß bei Schmetterlingen von paarungsbereiten weiblichen Tieren Sexuallockstoffe ( = Pheromone) erzeugt und in die Umgebung ausgeschieden werden; männliche Schmetterlinge derselben Art können dann mit Hilfe dieses Riechstoffes artspezifisch die Weibchen auffinden.

Grundsätzlich gibt es drei verschiedene Möglichkeiten. Sexuallockstoffe im Pflanzenschutz anzuwenden:

- in sog. Pheromonefallen, bestückt mit synthetischen Sexuallockstoffködern. Die Fallen werden in potentiellen Befallsgebieten ausgehängt; der Fallenfang von männlichen Faltern erbringt den Nachweis zum Auftreten dieses Schädlings. Es handelt sich um ein wichtiges Hilfsmittel im integrierten Pflanzenschutz zur Bestimmung des günstigsten Zeitpunktes für eine Bekämpfung mit konventionellen Methoden (sog. Monitoring).
- durch Kombination eines Lockstoffes mit insektiziden Wirkstoffen. Es besteht die Möglichkeit, dem Köder/der Falle Insektizide zuzusetzen oder aber nur in unmittelbarer Umgebung der Falle zu behandeln. Damit kann der größte Teil der aus weiter Entfernung angelockten männlichen Falterbevölkerung abgetötet werden (Abfangtechnik). Die Biotopbelastung ist auf ein vertretbares Maß reduziert.
- durch das Verfahren der Luftraumsättigung mit Sexuallockstoffen oder ähnlich, z.B. störend wirkenden Substanzen (Verwirrungs- oder Konfusionsmethode). Die männlichen Schmetterlinge werden beim Auffinden der Weibchen gestört und somit die Paarung der Tiere verhindert. In diesem Fall muß im gesamten Bereich der zu schützenden Pflanzenkultur eine größere Menge des Lockstoffes gleichmäßig im Luftraum verteilt werden, so daß die Männchen überall die Gegenwart des Duftstoffes empfinden können und ihr normales Orientierungsverhalten versagt. Bei diesem Verfahren können auch Stoffe verwendet werden, die an sich im Duftstoffbukett der Art nicht vorkommen, aber die olfaktorischen Organe (Antennen) der männlichen Tiere durch Erzeugung von Störreizen ausschalten (vgl. Birch (de.): Pheromones, North Holland Publ. Co. 1974).

Selbst bei dieser letztgenannten Verfahrensweise der Anwendung von Sexuallockstoffen werden nur verhältnismäßig kleine Mengen der Wirkstoffe, oft nur Bruchteile der üblichen Dosen der klassischen Insektizidwirkstoffe, benötigt. Es handelt sich dabei um eine äußerst selektive, nichttoxische Bekämpfungsmethode unter größtmöglicher Schonung der Nicht-Zielorganismen, insbesondere der Nützlinge.

Die Konfusionsmethode ist bisher zur Bekämpfung des einbindigen Traubenwicklers nicht angewendet worden, weil man aus Versuchen mit Pheromonfallen und durch die Auswertung einer wissenschaftlichen Methode (Windkanalversuche) den Schluß gezogen hat, daß der an sich bekannte Lockstoff, nämlich Z-9-Dodecenylacetat entsprechend dem natürlichen Vorbild äußerst rein sein muß. Technische Gemische o.ä. haben z.B. bei Fallenfangversuchen regelmäßig versagt.

Es wurde nun gefunden, daß gerade die z.B. bei technischer Herstellung von Dodecenylacetat anfallenden Mischungen von Z-9- und E-9-Isomeren bei der Verwirrungstechnik durchaus die Leistungen des natürlichen Pheromons entfalten.

Erfindungsgegenstand ist daher ein Verfahren zur Bekämpfung des einbindigen Traubenwicklers mittels der Verwirrungstechnik, das als verwirrendes Mittel Mischungen aus Z-9-Dodecenylacetat und E-9-Dodecenylacetat im Gewichtsverhältnis von 100:1 bis 1:100, vorzugsweise 99:1 bis 90:10 vorsieht.

Solche Gemische fallen bei der technischen Herstellung von Dodecenylacetat in typischer Zusammensetzung an.

Die technische Herstellung geht aus von entsprechendem Dodecinol, das in einer tertiären Aminbase (z.B. N-Methylmorpholin) an einem modifizierten Palladium-Katalysator hydriert und dann in üblicher Weise verestert wird. Ein praktisches Beispiel ist das folgende:

13,65 kg Dodecinol werden in 200 l Methanol vorgelegt, mit 408 g N-Methylmorpholin vermischt und nach Zugabe von 400 g eines Pd/Zn-Katalysators, wie er in der DE-OS 3 444 112 beschrieben ist, mit Stickstoff gespült, dann bei 0 bis 5°C mit Wasserstoff hydriert, bis keine weitere Gasaufnahme mehr erfolgt. Nach Abfiltrieren und Einengen des Filtrats verbleiben 13,6 kg eines Öls mit folgender GC-Zusammensetzung:

| | |
|---|---|
| cis-Dodecenol | 93,6 % |
| trans-Dodecenol | 2,6 % |
| Dodecanol (durchhydriert) | 0,6 % |
| Dodecinol (Ausgangsproduckt) | 0,15 % |

Das Mittel kann zusammen mit üblichen Hilfsmitteln, z.B. entsprechend präparierten Streifen aus Kunststoff, Bindegarnen, lockstoffgefüllten Ampullen o.ä. angewendet werden und z.B. auch andere herstellungsbedingte Verunreinigungen enthalten.

Die Bestätigung der Erfindung liefert überraschenderweise die Untersuchung mit Hilfe sog. Elektroantennogramme. So kann im EAG-Experiment nicht nur eine unerwartet hohe Reaktion der Antenne auf E-9-Dodecenylacetat gemessen werden. Reizungen mit 1:1-Mischungen aus Z9-12Ac und E9-12Ac führen zu synergistischen Wirkungen, d.h. signifikant höheren Erregungen, als es die doppelte Wirkstoffmenge des natürlichen Lockstoffs vermag.

Auch die Befunde aus unter Freilandbedingungen durchgeführten Modellversuchen zur Orientierungsunterbrechung (= Verwirrung) belegen sowohl eine Wirkung von Z9-12Ac als auch von E9-12Ac als Verwirrstoff.

Die nachstehenden Beispiele erläutern diesen Befund.

Beispiel 1

Der Boden eines 1 l-Weckglases wird mit einer acetonischen Pheromonlösung behandelt. Nach Verdunsten des Lösungsmittels werden drei Eupoecilia-Pärchen (3 Tage alt) in das Glas gesetzt und unter statischen Bedingungen für drei Tage in dieser Pheromonatmosphäre inkubiert. Danach erfolgt die Auswertung auf Befruchtung der Weibchen durch eine Spermatophorenanalyse.

| %-Inhibition der Befruchtung* | | | | | |
|---|---|---|---|---|---|
| Konzentration µl/Glas | Z9-12Ac | E9-12Ac | Z7-12Ac | E7-12Ac | Z9-14Ac |
| 1,0 | 100 | 96 | 100 | 86 | 87 |
| 0,1 | 78 | 73 | 39 | 0 | 0 |
| 0,05 | 53 | 54 | - | - | - |
| 0,02 | 40 | - | - | - | - |
| 0,01 | 17 | 0 | - | - | - |
| 0,005 | 0 | - | - | - | - |
| * bezogen auf die Befruchtungsrate in der unbehandelten Kontrolle. | | | | | |

Beispiel 2

In einem Modellversuch zur Orientierungsunterbrechung wird in einem Traubenwickler-Befallsgebiet eine Lockstoffalle (a) - bestückt mit einem attraktiven Pheromonköder (1 mg Beladung) - direkt neben einem zweiten gleichartigen Fallenkörper - bestückt mit einem mit Verwirrstoff imprägnierten Dispenser (Beladung 1 mg) - gehängt (Doppelfallenmodell). Die Auswertung erfolgt durch Auszählung der gefangenen männlichen Falter von E. ambiguella, die auf der in dem Fallenkörper plazierten Klebefläche haften bleiben.

| | Beköderung | | Summe gef. Männchen/E.amb. | | |
|---|---|---|---|---|---|
| | a | b | a | b | Z-Verwirrung |
| **Standort** | | | | | |
| Böchingen | | | | | |
| 10.-15.05.85 | + | - | 179 | 0 | - |
| | + | + | 27 | 0 | 84,9 |
| 17.07.-03.08.85 | + | - | 125 | 0 | - |
| | + | + | 8 | 0 | 93,6 |

a = Lockstoff Z9-12Ac + Synergisten
b = Verwirrstoff E9-12Ac

Beispiel 3

In einem Traubenwickler-Befallsgebiet wird eine mit einem attraktiven Köder bestückte Pheromonfalle aufgehängt. Verglichen wird mit einer zweiten gleichgearteten Falle, die von mit Verwirrstoff E9-12Ac (Beladung: 1 mg/Dispenser) imprägnierten Dispensern kreisförmig im Abstand von etwa 50 cm umgeben ist.

Die Auswertung auf einen Verwirreffekt erfolgt durch Auszählen der in den Fallen gefangenen männlichen Falter von E. ambiguella. Ein Verwirrerfolg ist gegeben, wenn die Männchen eine starke Lockstoffquelle nicht mehr lokalisieren können.

**Standort Weingarten**
**24.-28.07.85**

| | Summe gefangener E.amb. Männchen | % Verwirrung |
|---|---|---|
| Lockstoffalle allein | 148 | - |
| Lockstoffalle umgeben von 4 Verwirrquellen | 26 | 82,4 |
| Lockstoffalle umgeben von 8 Verwirrquellen | 5 | 96,6 |

**Patentansprüche**

1. Verfahren zur Bekämpfung des einbindigen Traubenwicklers Eupoecilia ambiguella mittels der Verwirrungsmethode, dadurch gekennzeichnet, daß man ein Mittel, enthaltend Z-9-Dodecenylacetat (I) und E-9-Dodecenylacetat (II) im Gewichtsverhältnis 100:1 bis 1:100 in einer solchen Menge verwendet, daß die männlichen Tiere der Art bei der Auffindung der weiblichen Tiere gestört werden.

2. Verfahren nach Anspruch 1, dadurch gekennzeichnet, daß das angewendete Mittel (I) und (II) sowie übliche Hilfsmittel, Zusatzstoffe und herstellungsbedingte Verunreinigungen enthält.

**Claims**

1. A method for controlling the grape berry moth Eupoecilia ambiguella by means of the confusion technique, wherein an agent containing Z-9-dodecenyl acetate (I) and E-9-dodecenyl acetate (II) in a weight ratio of from 100 : 1 to 1 : 100 is used in an amount such that the male animals of the species are disturbed in the search for the female animals.

2. A method as claimed in claim 1, wherein the agent used contains (I) and (II) and conventional assistants, additives and impurities arising from the preparation.

**Revendications**

1. Procédé pour combattre le cochylis, Eupoecillia ambiguella, par la technique de la confusion, caractérisé en ce que l'on utilise un produit contenant de l'acétate de Z-9-dodécyle (I) et de l'acétate de E-9-dodécényle (II) dans des proportions relatives en poids de 100 : 1 à 1 : 100, en quantités telles que les individus mâles de l'espèce soient perturbés dans la recherche des individus femelles.

2. Procédé selon la revendication 1, caractérisé en ce que le produit utilisé contient (I) et (II) avec des produits auxiliaires usuels, des additifs et des impuretés provenant de la préparation.